# EUROPEAN PATENT APPLICATION

(11) **EP 4 826 951 A1**
(43) Date of publication of application: **21.10.2026**
(21) Application number: 23961451.4
(22) Date of filing: 13.12.2023
(51) Int. Cl.: H02J 7/00

(54) **CONTROL DEVICE, CONTROL METHOD, AND PROGRAM**

(71) Applicant: Japan Tobacco Inc., Tokyo 105-6927 (JP)
(72) Inventor: YAMADA, Manabu, Tokyo 130-8603 (JP); SENJU, Masatoshi, Tokyo 130-8603 (JP); KAWASAKI, Reijiro, Tokyo 130-8603 (JP); SERITA, Kazutoshi, Tokyo 130-8603 (JP)
(74) Representative: Hoffmann Eitle
(86) International application number: PCT/JP2023/044695
(87) International publication number: WO 2025/126385

(57) **Abstract**

[Problem] To provide an arrangement capable of further improving usability.

[Solution] A control device comprising: a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

## Description

### TECHNICAL FIELD

The present disclosure relates to a control device, a control method, and a program.

### BACKGROUND ART

Inhalation devices that generate substances to be inhaled by a user are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol will also be referred to below as "puffing" or a "puffing action". Examples of devices classified as inhalation devices that may be cited include those used in place of cigarettes, such as heated tobacco and electronic cigarettes, and also nebulizers, etc. used for medical purposes. It should be noted that heated tobacco is an inhalation device of the type which generates an aerosol by heating an aerosol source. An electronic cigarette is an inhalation device of the type which generates an aerosol by atomizing a liquid aerosol source.

Laws and regulations relating to the right to repair have been established in recent years. Laws and regulations relating to the right to repair refer to various laws and regulations which aim to provide an environment in which end-users are able to repair industrial products, and thus make use of those products for longer, from the viewpoint of consumer protection and environmental protection. The right to repair allows products which have been broken or damaged in use to be repaired. As a result, consumers can delay buying new products and therefore save money. The environmental burden can also be lessened because it is possible to reduce waste, and use of resources. The right to repair is thus an important aspect in promoting a circular economy because it benefits both consumers and the environment.

PTL 1 indicated below discloses an inhalation device with a replaceable battery pack, as technology relating to the right to repair.

### CITATION LIST

### PATENT LITERATURE

PTL 1: WO 2014/163664 A1

### SUMMARY OF INVENTION

### PROBLEM TO BE SOLVED BY THE INVENTION

The technology disclosed in PTL 1 above has only recently been developed, and there is still room for improvement in various aspects.

Accordingly, the present disclosure was devised in light of the problem above, and the objective of the present disclosure lies in providing an arrangement capable of further improving usability.

### SOLUTION TO PROBLEM

In order to solve the problem above, one aspect of the present disclosure provides a control device comprising: a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

The control unit may implement the processing to recommend a candidate place for replacement of the battery pack, based on information indicating the remaining battery capacity of the battery pack currently connected to the inhalation device.

The control unit may implement the processing to recommend a candidate place for replacement of the battery pack when the remaining battery capacity of the battery pack currently connected to the inhalation device is less than a first threshold, and the first threshold may be set at or above a value corresponding to a remaining battery capacity enabling one or more of the abovementioned substrates to be consumed.

The control unit may set the first threshold on the basis of control information for controlling a temperature at which the inhalation device heats the aerosol source.

The control unit may set the first threshold on the basis of a mode of use of the inhalation device.

The control unit may implement the processing to recommend a candidate place for replacement of the battery pack when the number of substrates carried along with the inhalation device is less than a second threshold.

The control unit may implement the processing to recommend a candidate place for replacement of the battery pack when an abnormality has occurred in the battery pack connected to the inhalation device.

The control unit may preferentially recommend a battery pack provision device having a battery pack that can be provided to the inhalation device, as the candidate place for replacement of the battery pack.

The control unit may preferentially recommend a battery pack provision device that allows return of the spent battery pack used by the inhalation device, as the candidate place for replacement of the battery pack.

The control unit may recommend a candidate place for replacement of the battery pack, based on a scheduled charging end time for each of one or more charging points in the battery pack provision device, and an expected arrival time of the user of the inhalation device at the battery pack provision device.

The control unit may preferentially recommend a battery pack provision device geographically close to the user, as the candidate place for replacement of the battery pack.

The control unit may preferentially recommend a battery pack provision device placed in a sales outlet stocking the substrates used by the inhalation device, as the candidate place for replacement of the battery pack.

The control unit may control processing to reserve the battery pack at the candidate place for replacement of the battery pack.

Furthermore, in order to solve the problem above, another aspect of the present disclosure provides a control method implemented by means of a processor, the control method comprising: controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

Furthermore, in order to solve the problem above, another aspect of the present disclosure provides a program for causing a computer to function as a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

### ADVANTAGEOUS EFFECTS OF INVENTION

The present disclosure as described above provides a mechanism capable of further improving usability.

### BRIEF DESCRIPTION OF DRAWINGS

[Fig. 1] is a diagram to illustrate the outline of a system according to an embodiment of the present disclosure.
[Fig. 2] is a schematic diagram schematically showing a first configuration example of an inhalation device according to the embodiment.
[Fig. 3] is a schematic diagram schematically showing a second configuration example of an inhalation device according to the embodiment.
[Fig. 4] is a block diagram showing a configuration example of a battery pack according to the embodiment.
[Fig. 5] is a block diagram showing a configuration example of a user terminal according to the embodiment.
[Fig. 6] is a block diagram showing a configuration example of a charging station according to the embodiment.
[Fig. 7] is a block diagram showing a configuration example of a management server according to the embodiment.
[Fig. 8] is a diagram showing an example of a UI screen displayed by the user terminal according to the embodiment.
[Fig. 9] is a sequence chart showing an example of a processing flow implemented by the system according to the embodiment.
[Fig. 10] is a diagram showing an example of a UI screen displayed by the user terminal according to the embodiment.

### EMBODIMENTS OF THE INVENTION

Preferred embodiments of the present disclosure will be described in detail below with reference to the appended drawings. It should be noted that components having substantially the same functional configuration will be assigned the same reference numbers in the description and drawings to avoid giving a duplicate description.

### <1. Outline>

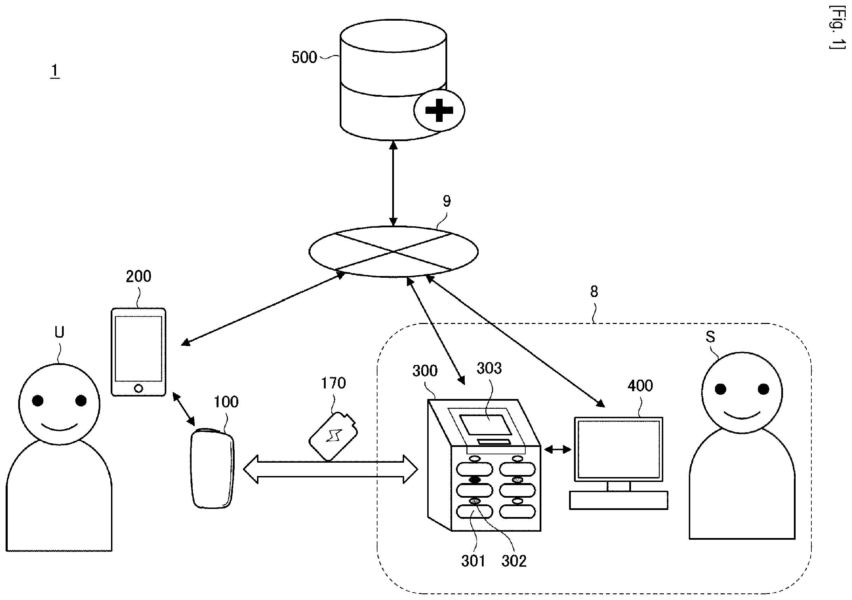

An outline of a system according to an embodiment of the present disclosure will be described first of all with reference to fig. 1.

Fig. 1 is a diagram to illustrate the outline of the system according to this embodiment. As shown in fig. 1, a system 1 according to this embodiment comprises: an inhalation device 100, a user terminal 200, a charging station 300, a sales outlet terminal 400, and a management server 500.

The inhalation device 100 and the user terminal 200 are carried and used by a user U. An inhalation device 100 and a user terminal 200 used by the same user U may be capable of communicating by using, for example, BLE (Bluetooth Low Energy (registered trademark)), or similar.

The inhalation device 100 is a device for generating an aerosol to be inhaled by the user U, using a substrate containing an aerosol source. The inhalation device 100 may be what is known as an electronic cigarette or heated tobacco. The inhalation device 100 may have a battery pack 170 detachably fitted (i.e., connected) thereto. The inhalation device 100 then operates with power from the battery pack 170 fitted thereto. A structure with the battery pack 170 removed from the inhalation device 100 may be referred to below as a "main body", or may also be referred to simply as the "inhalation device 100".

The battery pack 170 includes at least a secondary battery which can be charged and discharged. The battery pack 170 may comprise a storage medium and a communication terminal. Information may then be read from and written to the storage medium via the communication terminal by means of the inhalation device 100 or the charging station 300 to which the battery pack 170 is connected.

The user terminal 200 is an example of a terminal device used by the user U. The user terminal 200 may be a smartphone or tablet terminal, or similar. The user terminal 200 functions as an interface between the user U and the system 1. For example, the user terminal 200 inputs/outputs various types of information for replacement of the battery pack 170. Furthermore, the user terminal 200 may control operation of the inhalation device 100 by way of communication with the inhalation device 100.

The charging station 300 and the sales outlet terminal 400 are placed in a sales outlet 8 such as a convenience store, and are used by staff S working at the sales outlet 8. A charging station 300 and a sales outlet terminal 400 placed in the same sales outlet 8 may be capable of communicating by using, for example, a LAN (Local Area Network), or similar. The sales outlet 8 sells substrate packs containing one or more substrates used by the inhalation device 100. The sales outlet 8 may sell multiple types of substrate packs containing different types of substrates or different numbers of substrates.

The charging station 300 is an example of a charging device for charging battery packs 170, and a battery pack provision device for replaceably providing a charged battery pack 170 to each of a plurality of inhalation devices 100. The charging station 300 may have the battery pack 170 detachably connected thereto. The charging station 300 then charges the connected battery pack 170. To be more specific, the charging station 300 comprises an accommodating case 301 for accommodating the battery pack 170. The charging station 300 then charges the battery pack 170 accommodated in the accommodating case 301. Furthermore, the charging station 300 has an LED (light-emitting diode) 302, and a touch panel 303 for inputting/outputting various types of information. The LED 302 is arranged correspondingly with the accommodating case 301 and emits light in a color corresponding to the state of the corresponding accommodating case 301 (e.g., whether or not the accommodating case 301 is vacant, whether or not charging is in progress, and charging progress if charging is in progress).

The user U can replace the battery pack 170 fitted to the inhalation device 100 at the sales outlet 8. "Replacement" as referred to here means return of a spent battery pack 170 and provision of a battery pack 170 charged by the charging station 300.

For example, the user U returns the spent battery pack 170 after removing it from the inhalation device 100. The staff S connects the battery pack 170 returned by the user to the charging station 300 to start charging, and also removes a charged battery pack 170 from the charging station 300 for provision to the user U. The user U receives the battery pack 170 provided by the staff S and fits this battery pack 170 to the inhalation device 100. A battery pack 170 replacement service such as this enables the user U to replace a spent battery pack 170 with a fully charged battery pack 170 at any time "on the go", without the need to charge at home.

The charging station 300 may notify the staff S of a vacant accommodating case 301 where the battery pack 170 can be returned, by means of the LED 302 or the touch panel 303. Furthermore, the charging station 300 may also notify the staff S, by means of the LED 302 or the touch panel 303, to remove the battery pack 170 from the accommodating case 301 accommodating a fully charged battery pack 170, and to provide the fully charged battery pack 170 to the user U.

The service provided by the charging station 300 is not limited to replacement of battery packs 170. That is to say, the charging station 300 may accept only return of battery packs 170 or may only provide battery packs 170. For example, the user U may rent a spare battery pack 170, separately from the battery pack 170 they are carrying, or may return a rented spare battery pack 170.

Battery packs 170 are thus replaceably provided to each of a plurality of inhalation devices 100, via the charging station 300. The user U may, of course, also charge the battery pack 170 at home, etc.

The sales outlet terminal 400 is an example of a terminal device used by the staff S. The sales outlet terminal 400 may be a cash register terminal compliant with a POS (Point of Sale) system, for example. The sales outlet terminal 400 functions as an interface between the staff S and the system 1. For example, the sales outlet terminal 400 input/outputs various types of information for replacement of the battery pack 170. Furthermore, the sales outlet terminal 400 is also used to settle payments for replacement of battery packs 170.

It should be noted that the battery pack 170 is manufactured and operated in such a way as to have a capacity enabling at least all substrates contained in a substrate pack to be consumed when the battery pack 170 is fully charged. For this reason, it is desirable for a battery pack 170 to be replaced at the same timing as a substrate pack being purchased. This is because, in such a case, the battery pack 170 does not need to be replaced until all of the substrates contained in the substrate pack have been consumed.

For example, when the user U has purchased a substrate pack, the sales outlet terminal 400 may notify the staff S of information to prompt the user U to replace their battery pack 170. Alternatively, replacement of a battery pack 170 may be possible, or replacement of a battery pack 170 may be free of cost only when a substrate pack has been purchased. This feature enables better usability because the battery pack 170 is replaced at the same timing as a substrate pack being purchased.

The management server 500 is an example of a control device for controlling overall operation within the system 1. The management server 500 communicates via a network 9 with each of the user terminal 200, the charging station 300, and the sales outlet terminal 400, and controls operations thereof.

As an example, the management server 500 collects and analyzes various types of information relating to replacement of battery packs 170, and, based on analysis results, updates heating profiles and notifies the user U of the timing for replacing the battery pack 170. As another example, the management server 500 controls displays on the user terminal 200, charging station 300, and sales outlet terminal 400. As another example, the management server 500 performs processing to recover deteriorated or faulty battery packs 170 (i.e., to remove such battery packs from circulation), and to repair those battery packs which are repairable for recirculation.

### <2. Configuration Example>

### <2.1. Configuration example of inhalation device 100>

The inhalation device 100 is a device for generating a substance to be inhaled by a user. Hereinafter, the substance generated by the inhalation device 100 will be described as being an aerosol. Alternatively, the substance generated by the inhalation device 100 may be a gas.

### (1) First configuration example

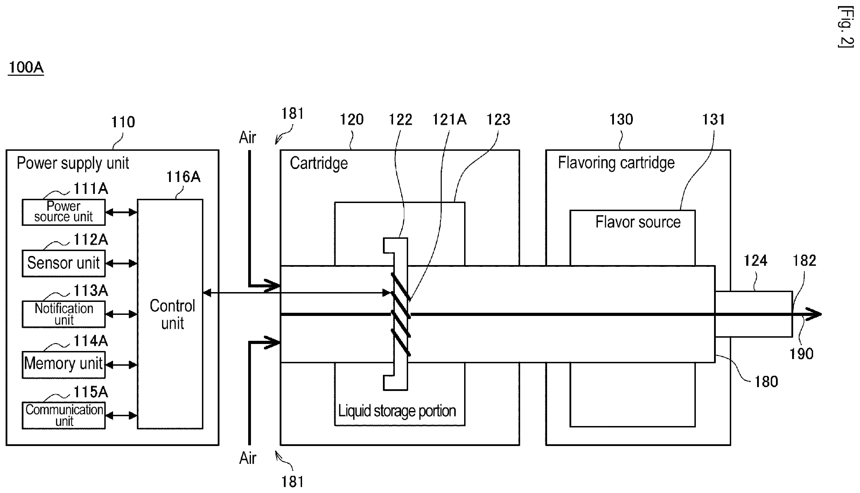

Fig. 2 is a schematic diagram schematically showing a first configuration example of the inhalation device 100 according to this embodiment. As shown in fig. 2, an inhalation device 100A according to this configuration example includes a power supply unit 110, a cartridge 120, and a flavoring cartridge 130. The power supply unit 110 comprises a power source unit 111A, a sensor unit 112A, a notification unit 113A, a memory unit 114A, a communication unit 115A, and a control unit 116A. The cartridge 120 includes a heating unit 121A, a liquid guiding portion 122, and a liquid storage portion 123. The flavoring cartridge 130 includes a flavor source 131 and a mouthpiece 124. An air flow path 180 is formed in the cartridge 120 and the flavoring cartridge 130.

The power source unit 111A stores electrical power. The power source unit 111A then supplies the electrical power to each component of the inhalation device 100A in accordance with control performed by the control unit 116A. The power source unit 111A may be configured, for example, by a rechargeable battery such as a lithium ion secondary battery.

The sensor unit 112A acquires various types of information relating to the inhalation device 100A. As an example, the sensor unit 112A is configured by a pressure sensor such as a condenser microphone, a flow rate sensor or a temperature sensor, etc., and acquires values associated with inhalation by a user. As another example, the sensor unit 112A is configured by an input device, such as a button or switch, for accepting input of information from the user.

The notification unit 113A notifies the user of information. The notification unit 113A is, for example, configured by a light-emitting device that emits light, a display device that displays images, a sound output device that outputs sound, or a vibration device that vibrates, etc.

The memory unit 114A stores various types of information for operation of the inhalation device 100A. The memory unit 114A is configured by a non-volatile storage medium such as a flash memory, for example.

The communication unit 115A is a communication interface capable of performing communication conforming to any wired or wireless communication standard. Examples of communication standards that may be used include standards that employ Wi-Fi (registered trademark), Bluetooth (registered trademark), BLE (Bluetooth Low Energy) (registered trademark), NFC (Near-Field Communication), or LPWA (Low Power Wide Area), for example.

The control unit 116A functions as an arithmetic processing device and a control device, and controls overall operation within the inhalation device 100A in accordance with various programs. The control unit 116A is realized by a CPU (central processing unit) or an electronic circuit such as a microprocessor, for example.

The liquid storage portion 123 stores the aerosol source. The aerosol source is atomized to generate an aerosol. The aerosol source is a polyhydric alcohol such as glycerol or propylene glycol, or a liquid such as water, for example. The aerosol source may include a tobacco-derived or non-tobacco-derived flavor component. If the inhalation device 100A is a medical inhaler such as a nebulizer, the aerosol source may include a drug.

The liquid guiding portion 122 guides the aerosol source, which is a liquid stored in the liquid storage portion 123, from the liquid storage portion 123, and holds the aerosol source. The liquid guiding portion 122 is, for example, a wick formed by twisting either a fibrous material such as glass fibers or a porous material such as a porous ceramic. In this case, the aerosol source stored in the liquid storage portion 123 is guided by the capillary effect of the wick.

The heating unit 121A heats the aerosol source to atomize the aerosol source, thereby generating the aerosol. In the example shown in fig. 2, the heating unit 121A is configured as a coil wrapped around the liquid guiding portion 122. When the heating unit 121A generates heat, the aerosol source held in the liquid guiding portion 122 is heated and atomized, generating the aerosol. The heating unit 121A generates heat when supplied with electricity from the power source unit 111A. By way of example, electricity may be supplied when the sensor unit 112A detects that the user has started inhaling and/or that predetermined information has been input. The supply of electricity may then be stopped when the sensor unit 112A detects that the user has finished inhaling and/or that predetermined information has been input.

The flavor source 131 is a component for imparting a flavor component to the aerosol. The flavor source 131 may include tobacco-derived or non-tobacco-derived flavor components.

The air flow path 180 is a flow path for air to be inhaled by the user. The air flow path 180 has a tubular structure with an air inflow hole 181, which is an inlet for air into the air flow path 180, and an air outflow hole 182, which is an outlet for air from the air flow path 180, at the two ends thereof. Part way along the air flow path 180, the liquid guiding portion 122 is disposed on the upstream side (the side closer to the air inflow hole 181), and the flavor source 131 is disposed on the downstream side (the side closer to the air outflow hole 182). Air that flows in through the air inflow hole 181 as the user inhales is mixed with the aerosol generated by the heating unit 121A and is transported through the flavor source 131 to the air outflow hole 182, as shown by the arrow 190. When the mixed fluid of aerosol and air passes through the flavor source 131, the flavor component contained in the flavor source 131 is added to the aerosol.

The mouthpiece 124 is a member that is held in the user's mouth during inhalation. The air outflow hole 182 is disposed in the mouthpiece 124. The user holds the mouthpiece 124 in their mouth and inhales, making it possible to draw the mixed fluid of aerosol and air into the oral cavity.

A configuration example of the inhalation device 100A has been described above. The inhalation device 100A is, of course, not limited to the configuration described above, and various configurations, such as those illustrated below by way of example may be adopted.

As an example, the inhalation device 100A need not include the flavoring cartridge 130. In this case, the cartridge 120 is provided with the mouthpiece 124.

As another example, the inhalation device 100A may include a plurality of types of aerosol sources. A plurality of types of aerosol generated from the plurality of types of aerosol sources may be mixed within the air flow path 180 to cause a chemical reaction, thereby generating yet more other types of aerosol.

Furthermore, the means for atomizing the aerosol source is not limited to heating by the heating unit 121A. For example, the means for atomizing the aerosol source may be vibration atomization or induction heating.

### (2) Second configuration example

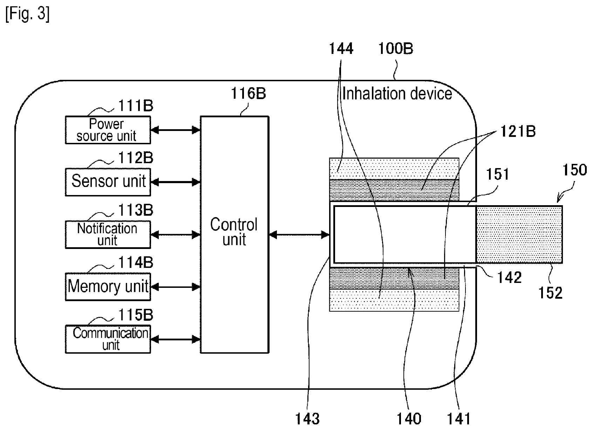

Fig. 3 is a schematic diagram schematically showing a second configuration example of the inhalation device 100 according to this embodiment. As shown in fig. 3, an inhalation device 100B according to this configuration example comprises a power source unit 111B, a sensor unit 112B, a notification unit 113B, a memory unit 114B, a communication unit 115B, a control unit 116B, a heating unit 121B, an accommodating portion 140, and a heat insulating portion 144.

The power source unit 111B, sensor unit 112B, notification unit 113B, memory unit 114B, communication unit 115B, and control unit 116B are each substantially the same as the corresponding component included in the inhalation device 100A of the first configuration example.

The accommodating portion 140 has an internal space 141, and holds a stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 which has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100B, for example. An air outflow hole, which is an outlet for air from the air flow path to the internal space 141, is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100B is a medical inhaler such as a nebulizer, the aerosol source may include a drug. The aerosol source may, for example, be a liquid such as water and a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is held in the accommodating portion 140, at least part of the substrate portion 151 is accommodated in the internal space 141, and at least part of the mouthpiece portion 152 protrudes from the opening 142. Then, when the user holds the mouthpiece portion 152 protruding from the opening 142 in their mouth and inhales, air flows into the internal space 141 via the air flow path which is not depicted, and reaches the inside of the user's mouth together with the aerosol generated from the substrate portion 151.

In the example shown in fig. 3, the heating unit 121B has a film-like form and is arranged so as to cover the outer circumference of the accommodating portion 140. Then, when the heating unit 121B generates heat, the substrate portion 151 of the stick-type substrate 150 is heated from the outer periphery, generating the aerosol.

The heat insulating portion 144 prevents heat transfer from the heating unit 121B to other components. For example, the heat insulating portion 144 is configured from a vacuum heat insulating material or an aerogel heat insulating material, or the like.

A configuration example of the inhalation device 100B has been described above. The inhalation device 100B is, of course, not limited to the configuration described above, and various configurations, such as those illustrated below by way of example may be adopted.

As one example, the heating unit 121B may be configured with a blade-like form and may be arranged so as to protrude into the internal space 141 from the bottom portion 143 of the accommodating portion 140. In that case, the blade-like heating unit 121B is inserted into the substrate portion 151 of the stick-type substrate 150 and heats the substrate portion 151 of the stick-type substrate 150 from the inside. As another example, the heating unit 121B may be arranged so as to cover the bottom portion 143 of the accommodating portion 140. Furthermore, the heating unit 121B may be configured from a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may include an opening and closing mechanism such as a hinge for opening and closing part of an outer casing that forms the internal space 141. Then, by opening and closing the outer casing, the accommodating portion 140 may accommodate and grip the stick-type substrate 150 that has been inserted into the internal space 141. In this case, the heating unit 121B may be provided on the clamping part of the accommodating portion 140, and may heat the stick-type substrate 150 while pressing the same.

Furthermore, the means for atomizing the aerosol source is not limited to heating by the heating unit 121B. For example, the means for atomizing the aerosol source may be induction heating. In that case, the inhalation device 100B comprises at least an electromagnetic induction source such as a coil for generating a magnetic field, instead of the heating unit 121B. A susceptor, which generates heat by means of induction heating, may be provided in the inhalation device 100B, or may be contained in the stick-type substrate 150.

Furthermore, the inhalation device 100B may additionally include the heating unit 121A, the liquid guiding portion 122, the liquid storage portion 123, and the air flow path 180 according to the first configuration example, and the air flow path 180 may supply air to the internal space 141. In this case, the mixed fluid of the aerosol generated by the heating unit 121A and air flows into the internal space 141 and is further mixed with the aerosol generated by the heating unit 121B, and reaches the oral cavity of the user.

### (3) Supplementary information

In the following description, where there is no particular need to distinguish between the inhalation device 100A and the inhalation device 100B described above, the letter at the end of the reference sign will be omitted and these inhalation devices will be referred to in a general manner as the "inhalation device 100"and described without distinction. Similarly, where there is no particular need to distinguish between components common to the inhalation device 100A and the inhalation device 100B, the letter at the end of the reference sign will be omitted, and those components will be described without distinction.

The inhalation device 100 is an example of an aerosol-generating system which generates an aerosol to be inhaled by a user by using a substrate containing either one of an aerosol source and a flavor source. The flavor source is a component for imparting a flavor component to the aerosol. In the first configuration example, the cartridge 120 and the flavoring cartridge 130 constitute an example of a substrate used in the aerosol-generating system. In the second configuration example, the stick-type substrate 150 is an example of a substrate used in the aerosol-generating system. In terms of the second configuration example, the combination of the inhalation device 100 and the stick-type substrate 150 may also be seen as an aerosol-generating system.

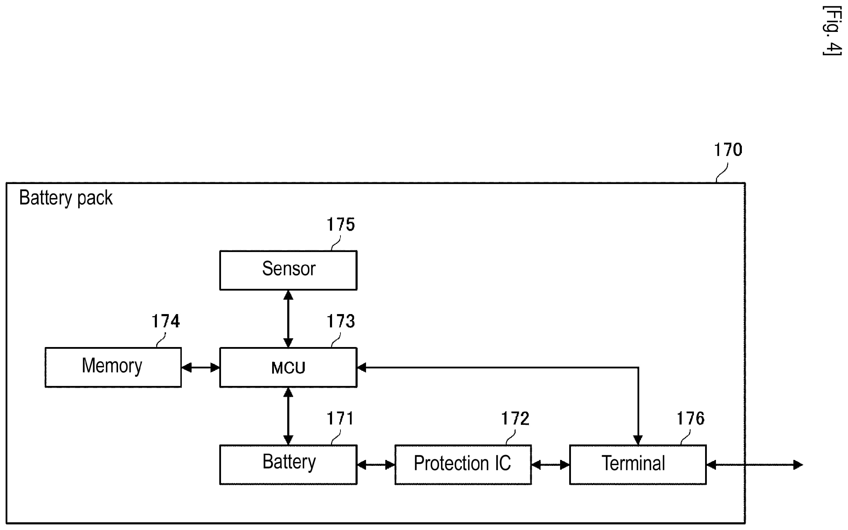

The battery pack 170 shown in fig. 1 includes at least the power source unit 111 shown in fig. 2 or fig. 3. A configuration example of the battery pack 170 will be described next with reference to fig. 4.

Fig. 4 is a block diagram showing a configuration example of the battery pack 170 according to this embodiment. As shown in fig. 4, the battery pack 170 comprises: a battery 171, a protection IC (Integration Circuit) 172, an MCU (Micro Controller Unit) 173, a memory 174, a sensor 175, and a terminal 176.

The battery 171 is a secondary battery which can be charged and discharged. The battery 171 corresponds to the power source unit 111 shown in fig. 2 or fig. 3. The battery 171 supplies power to an external device (e.g., the main body of the inhalation device 100) via the protection IC 172 and the terminal 176. Furthermore, the battery 171 is charged by means of power supplied from an external device (e.g., the charging station 300) via the protection IC 172 and the terminal 176.

The protection IC 172 is a protection circuit for stopping charging in the event of overcharging and stopping discharging in the event of over-discharge.

The MCU 173 is an example of a control unit for controlling operation of the battery pack 170. The battery pack 170 implements various types of processing on the basis of control performed by the MCU 173. Examples of the processing controlled by means of the MCU 173 include storage and reading of information by the memory 174, detection of information by the sensor 175, sending/receiving of power via the terminal 176, and sending/receiving of information via the terminal 176. Other processing implemented by the battery pack 170, such as processing based on input of information to each component and information output from each component, are also controlled by means of the MCU 173.

The memory 174 is an example of memory unit for storing information. The memory 174 is configured by a non-volatile storage medium such as a flash memory, for example.

The sensor 175 is an example of a detector for detecting various types of information relating to the battery pack 170. For example, the sensor 175 detects the temperature of the battery 171, and detects voltage values and current values during charging and discharging of the battery 171.

The terminal 176 functions as a power terminal for sending/receiving power and an information terminal for sending/receiving information to/from the device to which the battery pack 170 is connected. The terminal 176 may be a USB (Universal Serial Bus) connector, for example.

It should be noted that fig. 4 illustrates an example in which the protection IC 172 is included in the battery pack 170, but the protection IC 172 may equally be included in the device to which the battery pack 170 is connected (e.g., the main body of the inhalation device 100 or the charging station 300).

### (4) Heating profile

The control unit 116 controls the operation of the heating unit 121 based on the heating profile. The heating profile is control information for controlling the temperature at which the aerosol source is heated. The heating profile defines a target value of a parameter corresponding to a temperature at which the aerosol source is heated. The temperature of the heating unit 121 is an example of the temperature at which the aerosol source is heated. The resistance of the heating unit 121 is an example of a parameter corresponding to the temperature at which the aerosol source is heated. That is to say, the heating profile may also define a target value of the resistance of the heating unit 121 (which is also referred to below as the "target resistance"). The resistance of the heating unit 121 varies according to the temperature of the heating unit 121 (a heating resistor constituting the heating unit 121, to be more precise). By way of example, it is assumed hereinafter that the resistance of the heating unit 121 rises as the temperature of the heating unit 121 rises.

The temperature control of the heating unit 121 can be realized by known feedback control, for example. The feedback control may be, for example, PID control (Proportional-Integral-Differential Controller). The control unit 116 may cause power from the power source unit 111 to be supplied to the heating unit 121 in the form of pulses by pulse width modulation (PWM) or pulse frequency modulation (PFM). In that case, the control unit 116 can control the temperature of the heating unit 121 by adjusting the duty ratio of the power pulses in the feedback control.

A period during which electrical supply to the heating unit 121 is controlled on the basis of the heating profile, in other words a period during which heating by means of the heating unit 121 is implemented on the basis of the heating profile, will also be referred to below as a "heating session". Furthermore, heating based on the heating profile may also be referred to below simply as "heating".

### <2.2. Configuration example of user terminal 200>

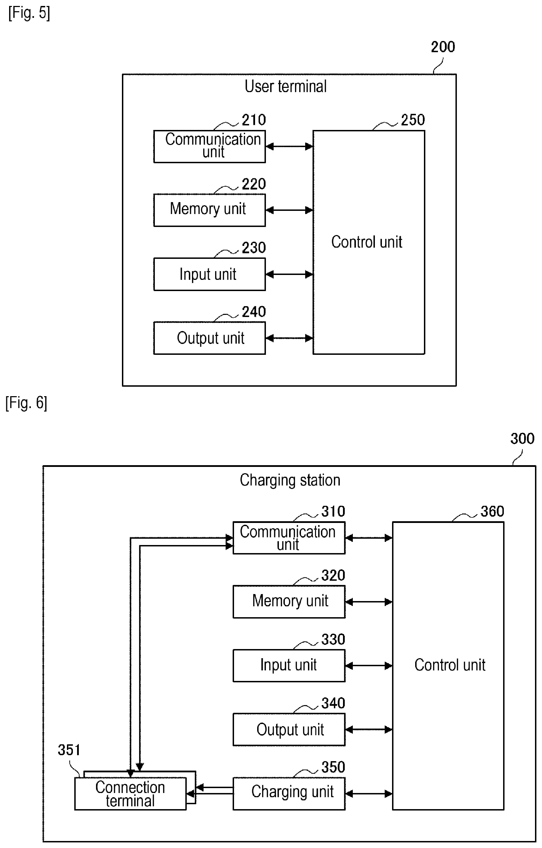

Fig. 5 is a block diagram showing a configuration example of the user terminal 200 according to the embodiment. As shown in fig. 5, the user terminal 200 includes a communication unit 210, a memory unit 220, an input unit 230, an output unit 240, and a control unit 250.

The communication unit 210 is a communication interface for sending and receiving information between the user terminal 200 and another device. The communication unit 210 performs communication conforming to any wired or wireless communication standard. Examples of communication standards which may be used include USB (Universal Serial Bus), Wi-Fi (Registered Trademark), Bluetooth (registered trademark), or NFC (Near Field Communication), etc.

The memory unit 220 stores various types of information. The memory unit 220 is configured by a non-volatile storage medium such as a flash memory, for example.

The input unit 230 has the function of receiving input of various types of information. The input unit 230 may include an input device for accepting input of information from the user U, such as a button, a keyboard, a touch panel, or a microphone, for example. Alternatively, the input unit 230 may include a sensor for detecting various types of information. Examples of sensors that may be cited include a GNSS (Global Navigation Satellite System) receiver for acquiring location information of the user terminal 200, a gyro sensor and an acceleration sensor for detecting movement of the user terminal 200, and a camera capable of reading two-dimensional barcodes.

The output unit 240 has the function of outputting information. The output unit 240 may include an output device that outputs information to the user U. Examples of output devices that may be cited include: a display device for displaying information, a light-emitting device for emitting light, a vibration device which vibrates, and a sound output device for outputting sound, etc. A display is an example of a display device. A light-emitting diode (LED) is an example of a light-emitting device. An eccentric motor is an example of a vibration device. A speaker is an example of a sound output device.

The control unit 250 functions as an arithmetic processing device or a control device, controlling overall operation within the user terminal 200 in accordance with various programs. The control unit 250 is realized by a CPU (central processing unit) or an electronic circuit such as a microprocessor, for example. The control unit 250 may also include a ROM (read-only memory) for storing programs and computation parameters, etc. which are used, and a RAM (random access memory) for temporarily storing suitably changing parameters, etc. The user terminal 200 implements various types of processing on the basis of control performed by the control unit 250. Examples of processing controlled by means of the control unit 250 include: sending/receiving of information by the communication unit 210, storage and reading of information by the memory unit 220, processing of information input by the input unit 230, and output of information from the output unit 240. Other processing implemented by the user terminal 200, such as processing based on input of information to each component and information output from each component, are also controlled by means of the control unit 250.

It should be noted that the functions of the control unit 250 may be realized using an application. The application may be pre-installed or downloaded. Furthermore, the functions of the control unit 250 may be realized by means of PWA (progressive web apps).

### <2.3. Configuration example of charging station 300>

Fig. 6 is a block diagram showing a configuration example of the charging station 300 according to this embodiment. As shown in fig. 6, the charging station 300 comprises: a communication unit 310, a memory unit 320, an input unit 330, an output unit 340, a charging unit 350, one or more connection terminals 351, and a control unit 360.

The communication unit 310 is a communication interface for sending and receiving information between the charging station 300 and another device. As an example, the communication unit 310 sends/receives, via the connection terminal 351, information to/from the battery pack 170 connected to the connection terminal 351. As another example, the communication unit 310 sends/receives information to/from the management server 500. The communication unit 310 performs communication conforming to any wired or wireless communication standard. Examples of communication standards which may be used include USB (Universal Serial Bus), Wi-Fi (Registered Trademark), Bluetooth (registered trademark), NFC (Near Field Communication), or LAN (Local Area Network), etc.

The memory unit 320 stores various types of information. The memory unit 320 is configured by a non-volatile storage medium such as a flash memory, for example.

The input unit 330 has the function of receiving input of various types of information. The input unit 330 may include an input device for accepting input of information from the staff S, such as a button, a keyboard, a touch panel, or a microphone, for example. Alternatively, the input unit 330 may include a sensor for detecting various types of information. A camera capable of reading two-dimensional codes may be cited as an example of a sensor. The touch panel 303 described with reference to fig. 1 is an example of the input unit 330.

The output unit 340 has the function of outputting information. The output unit 340 may comprise an output device for outputting information to the staff S, such as a display device for displaying information, a light-emitting device for emitting light, a vibration device which vibrates, and a sound output device for outputting sound, for example. A display is an example of a display device. A light-emitting diode (LED) is an example of a light-emitting device. An eccentric motor is an example of a vibration device. A speaker is an example of a sound output device. The LEDs 302 and the touch panel 303 described with reference to fig. 1 are examples of the output unit 340.

The charging unit 350 has the function of charging the battery pack 170. A charging unit 350 is accommodated in the accommodating case 301 described with reference to fig. 1, and charges a battery pack 170 which has been electrically connected to the charging station 300. In particular, the charging unit 350 charges a battery pack 170 connected to the connection terminal 351.

The connection terminal 351 is an example of a connecting portion which is electrically connected to the battery pack 170. The connection terminal 351 functions as a power terminal for sending/receiving power and an information terminal for sending/receiving information to/from the battery pack 170 connected to the connection terminal 351. The connection terminal 351 may be a USB connector, for example. The connection terminal 351 is disposed in the accommodating case 301 and electrically connects to the terminal 176 of the battery pack 170 accommodated in the accommodating case 301. As shown in fig. 1, the charging station 300 may comprise a plurality of accommodating cases 301. That is to say, the charging station 300 may comprise a plurality of connection terminals 351 for simultaneously charging a plurality of battery packs 170 in parallel. It should be noted that the electrical connection between the battery pack 170 and the charging station 300 is not limited to a wired connection and may equally be a wireless connection (i.e., wireless charging).

The integrated structure comprising the accommodating case 301 and the connection terminal 351 for charging one battery pack 170 will also be referred to below as a "charging point".

The control unit 360 functions as an arithmetic processing device or a control device, controlling overall operation within the charging station 300 in accordance with various programs. The control unit 360 is realized by a CPU (central processing unit) or an electronic circuit such as a microprocessor, for example. The control unit 360 may also include a ROM (read-only memory) for storing programs and computation parameters, etc. which are used, and a RAM (random access memory) for temporarily storing suitably changing parameters, etc. The charging station 300 implements various types of processing on the basis of control performed by the control unit 360. Examples of processing controlled by means of the control unit 360 include: sending/receiving of information by the communication unit 310, storage and reading of information by the memory unit 320, processing of information input by the input unit 330, output of information from the output unit 340, and starting/stopping of charging by the charging unit 350. Other processing implemented by the charging station 300, such as processing based on input of information to each component and information output from each component, are also controlled by means of the control unit 360.

### <2.4. Configuration example of management server 500>

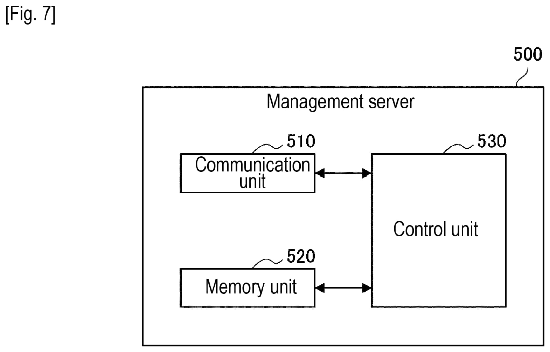

Fig. 7 is a block diagram showing a configuration example of the management server 500 according to this embodiment. As shown in fig. 7, the management server 500 includes a communication unit 510, a memory unit 520, and a control unit 530.

The communication unit 510 is a communication interface for sending and receiving information between the management server 500 and another device. The communication unit 510 performs communication conforming to any wired or wireless communication standard.

The memory unit 520 stores various types of information for operation of the management server 500. The memory unit 520 is constructed of a non-volatile storage medium such as, for example, an HDD (Hard Disk Drive) and an SSD (Solid State Drive).

The control unit 530 functions as an arithmetic processing device and a control device, controlling overall operation within the management server 500 in accordance with various programs. The control unit 530 is realized by a CPU (Central Processing Unit) and an electronic circuit such as a microprocessor, for example. The control unit 530 may also include a ROM (read-only memory) for storing programs and computation parameters, etc. which are used, and a RAM (random access memory) for temporarily storing suitably changing parameters, etc. The management server 500 implements various types of processing on the basis of control performed by the control unit 530. Sending and receiving of information by the communication unit 510, and storage/reading of information by the memory unit 520 are examples of processing controlled by the control unit 530. Other processing implemented by the management server 500, such as processing based on input of information to each component and information output from each component, are also controlled by means of the control unit 530.

### <3. Collection of information via battery pack 170>

An external device such as the main body of the inhalation device 100 or the charging station 300 may write various types of information to the memory 174 while connected to the battery pack 170. More specifically, the MCU 173 writes information received from the external device into the memory 174 via the terminal 176 while connected to the external device. As an example, the MCU 173 may receive information relating to electrical supply to the main body of the inhalation device 100 from the battery 171 while the battery pack 170 is connected to the main body of the inhalation device 100, and may write this information into the memory 174. As another example, the MCU 173 may receive information relating to charging of the battery 171 by the charging station 300 while the battery pack 170 is connected to the charging station 300, and may write this information into the memory 174.

Of course, the battery pack 170 may write information acquired by the battery pack 170 itself into the memory 174. As an example, the MCU 173 may write, into the memory 174, information detected by means of the sensor 175 while the battery pack 170 is connected to the main body of the inhalation device 100. As another example, the MCU 173 may write, into the memory 174, information detected by means of the sensor 175 while the battery pack 170 is connected to the charging station 300.

While the battery pack 170 is connected to an external device such as the main body of the inhalation device 100 or the charging station 300, the MCU 173 sends information stored in the memory 174 to the external device via the terminal 176. As a result, the external device can perform various types of processing using the information received from the battery pack 170. For example, the charging station 300 sends the information received by the battery pack 170 to the management server 500.

Preferably, the management server 500 periodically collects and analyzes information relating to the inhalation device 100, and implements measures using the analysis results in order to improve the quality of experience for the user who is using the inhalation device 100. The information relating to the inhalation device 100 is typically collected by the management server 500 via the user terminal 200, which is capable of communicating with both the inhalation device 100 and the management server 500. However, it is difficult for information to be collected periodically via the user terminal 200 if the inhalation device 100 does not communicate with the user terminal 200, or if the user terminal 200 does not communicate with the management server 500.

In this regard, the configuration above enables the management server 500 to periodically collect information relating to the inhalation device 100 via the charging station 300 to which the battery pack 170 is connected when the battery pack 170 is replaced. As a result, various measures can be implemented to improve the quality of experience for the user who is using the inhalation device 100, thereby enabling a better quality of user experience.

Furthermore, the configuration above enables exchange of information among external devices via the battery pack 170. The creation of various services is expected as a result.

Examples of the information which can be stored in the battery pack 170 and collected by utilizing replacement of the battery pack 170 will be described below.

### (1) Battery pack ID

The memory 174 of the battery pack 170 stores a battery pack ID, which is identification information of the battery pack 170. The battery pack ID may be written in when the battery pack 170 is manufactured.

### (2) Specification information

The memory 174 of the battery pack 170 stores specification information, which is information indicating the specification of the battery pack 170.

The specification information of the battery pack 170 may include a manufacturer ID, which is identification information of the manufacturer which manufactured the battery pack 170.

The specification information of the battery pack 170 may include information indicating a date of manufacture of the battery pack 170.

The specification information of the battery pack 170 may include information indicating the model of battery pack 170.

The specification information of the battery pack 170 may include information indicating the initial capacity of the battery 171.

### (3) Replacement log

The memory 174 of the battery pack 170 stores a replacement log, which is a log relating to replacement of the battery pack 170. The replacement log may include at least any one item of information from those illustrated below.

The replacement log may include a device ID, which is identification information of an inhalation device 100 to which the battery pack 170 provided from the charging station 300 was connected. The replacement log may further include a user ID, which is identification information of the user U of the inhalation device 100 to which the battery pack 170 provided from the charging station 300 was connected.

The replacement log may include information indicating a time of replacement of the battery pack 170. More specifically, the replacement log may include information indicating the time at which the battery pack 170 was provided (e.g., the date and time at which the battery pack 170 was removed from the charging station 300, or the date and time at which the battery pack 170 was connected to the inhalation device 100). Furthermore, the replacement log may include information indicating the time at which the battery pack 170 was returned (e.g., the date and time at which the battery pack 170 was removed from the inhalation device 100, or the date and time at which the battery pack 170 was connected to the charging station 300).

The replacement log may include information indicating the place where the battery pack 170 was replaced. More specifically, the replacement log may include information indicating the place where the battery pack 170 was provided (e.g., location information or identification information of the sales outlet 8). The replacement log may furthermore include information indicating the place where the battery pack 170 was returned (e.g., location information or identification information of the sales outlet 8).

The replacement log may include information of a substrate pack purchased together with replacement of the battery pack 170. The substrate pack information includes the type of substrate and number of substrates contained in the substrate pack, for example.

The replacement log may include information indicating the number of times of replacement of the battery pack 170. The number of times of replacement of the battery pack 170 may be incremented each time the battery pack 170 is connected to a different inhalation device 100 from the previous time. Alternatively, the number of times of replacement of the battery pack 170 may be incremented each time the battery pack 170 is connected to the charging station 300.

An example of the replacement log was described above. The replacement log may be acquired by and written to the main body of the inhalation device 100, the charging station 300, or the battery pack 170 at the time of replacement of the battery pack 170, for example. Moreover, for the information of a substrate pack purchased together with replacement of the battery pack 170, the charging station 300 may acquire this information from the sales outlet terminal 400 and write the information into the memory 174 of the battery pack 170.

### (4) Heating-related discharge information

The memory 174 of the battery pack 170 stores heating-related discharge information, which is information indicating the discharge situation of the battery 171 when the heating unit 121 implemented heating based on the heating profile. The heating-related discharge information may include at least any one item of information from those illustrated below.

The heating-related discharge information may include the value of a drop in voltage of the battery 171 when the heating unit 121 implemented heating. The value of the drop in voltage of the battery 171 may be the difference in voltage of the battery 171 before and after heating was implemented. This information makes it possible to judge the state of deterioration of the battery pack 170 (more specifically, the battery 171), or whether an error has occurred.

The heating-related discharge information may include the value of a reduction in charge capacity (units: mAh) of the battery 171 when the heating unit 121 implemented heating. The value of the reduction in charge capacity of the battery 171 may be the difference in charge capacity before and after heating was implemented, or the difference in charge capacity from the time of manufacture until the present time. This information makes it possible to judge the state of deterioration of the battery pack 170, or whether an error has occurred.

The heating-related discharge information may include the value of an increase in temperature of the battery 171 when the heating unit 121 implemented heating. The value of the increase in temperature of the battery 171 may be the difference between the minimum temperature and maximum temperature during a heating session. This information makes it possible to judge the state of deterioration of the battery pack 170, or whether an error has occurred.

The heating-related discharge information may include a time-series transition of the discharge amount during a heating session. The discharge amount temporarily increases immediately after a puff has been taken in order to restore the temperature of the heating unit 121, which decreases as a puff is taken, to its original value. This information makes it possible to determine the number of puffs taken during a heating session.

The heating-related discharge information may include the number of times discharging was performed for heating. This information makes it possible to determine the number of times heating was implemented.

The heating-related discharge information may include intervals between discharges performed for heating. This information makes it possible to determine intervals of heating implementation.

The heating-related discharge information may include at least either of the discharge amount and discharge time when heating was implemented. This information makes it possible to determine the heating profile used by the inhalation device 100.

The heating-related discharge information may include the number of times discharging was performed for an autorun function. The autorun function is a function in which the start of heating is triggered by a substrate being set in (e.g., inserted into or connected to) the inhalation device 100. This information makes it possible to determine the number of times the autorun function was implemented.

The heating-related discharge information may include the number of times abnormal discharge occurred and the discharge amount when the abnormal discharge occurred. This information makes it possible to record errors that have occurred in the battery pack 170.

Examples of heating-related discharge information were described above. The heating-related discharge information may be acquired by the battery pack 170 or the main body of the inhalation device 100, and may be written into the memory 174, for example.

### (5) Non-heating-related discharge information

The memory 174 of the battery pack 170 stores non-heating-related discharge information, which is information indicating the discharge situation of the battery 171 during periods in which heating based on the heating profile is not being implemented. The non-heating-related discharge information may include at least any one item of information from those illustrated below.

The non-heating-related discharge information may include the number of times discharging was performed for a transition from sleep mode to active mode. This information makes it possible to determine the number of transitions from sleep mode to active mode. It should be noted that sleep mode is an operating mode in which heating is prohibited. Sleep mode can be switched to active mode in response to a user action such as depressing a button, for example. Active mode is an operating mode in which heating is permitted. In active mode, heating is started in response to a user action such as depressing a button, for example.

The non-heating-related discharge information may include at least either of the discharge amount and discharge time during periods of continuous communication by the communication unit 115. This information makes it possible to determine a communication amount or a communication time of the inhalation device 100.

Examples of non-heating-related discharge information were described above. The non-heating-related discharge information may be acquired by the battery pack 170 or the main body of the inhalation device 100, and may be written into the memory 174, for example.

### (6) Device information

The memory 174 of the battery pack 170 stores device information, which is information indicating the mode of use of the inhalation device 100. The device information may include at least any one item of information from those illustrated below.

The device information may include information indicating a time of smoking. "Smoking" refers to the overall action of the user U inhaling the aerosol generated during heating based on the heating profile. Multiple puffs may be taken during one occasion of "smoking". The information indicating the time of smoking may be a date and time at which heating started, or may be a date and time of the puff initially detected during a heating session. This information makes it possible to determine smoking intervals (i.e., heating session intervals), the number of times of smoking per day (i.e., the number of heating sessions), and the total number of times of smoking.

The device information may include information indicating a smoking time. The information indicating the smoking time of the user U may be the length of a heating session, or may be the time from the puff initially detected until the puff detected last during a heating session. This information can be utilized to customize the heating profile to suit the user U.

The device information may include information indicating a total smoking time. The total smoking time is the cumulative total of smoking times since the inhalation device 100 was manufactured. This information can be utilized in order to recommend timings for maintenance of the inhalation device 100. Furthermore, this information makes it possible to determine the smoking time over the entire life-cycle of the inhalation device 100.

The device information may include information indicating a total number of times of smoking. The total number of times of smoking is the cumulative total of the number of times of smoking since the inhalation device 100 was manufactured. This information can be utilized in order to recommend timings for maintenance of the inhalation device 100. Furthermore, this information makes it possible to determine the number of times of smoking over the entire life-cycle of the inhalation device 100.

The device information may include information indicating a total usage time. The total usage time is the time elapsed from the time at which the inhalation device 100 was initially activated. This information can be utilized in order to recommend timings for maintenance of the inhalation device 100. Furthermore, this information makes it possible to determine the usage time of the inhalation device 100 over the entire life-cycle of the inhalation device 100.

The device information includes information indicating a security setting. The inhalation device 100 may be equipped with a security function enabling locking for child safety, etc. When the security function is enabled, the inhalation device 100 operates in a locked state with heating prohibited or operates in an unlocked state with heating permitted. Unlocking may be triggered in a number of ways, such as when a predetermined button is operated or when a communication connection with the user terminal 200 has been established. When the security function is disabled, heating is continuously permitted by the inhalation device 100. The information indicating the security setting may include a time at which the security function was enabled and a time at which the security function was disabled. The information indicating the security setting may further include, during a period in which the security function is enabled, a time of transition to the locked state and a time of transition to the unlocked state, and information indicating the unlock trigger. By referring to the information indicating the security setting together with the information indicating the time of smoking described above, it is possible to determine which unlock trigger was used to start smoking, or to determine that smoking was started while the security setting was disabled, etc.

The device information may include information indicating the number of puffs. The number of puffs is the number of times puffing was detected during a heating session. This information makes it possible to determine the number of puffs taken by the user U during one smoking session. This information can be utilized to customize the heating profile to suit the user U.

The device information may include information indicating times of puffing. The times of puffing are times at which puffing was detected during a heating session. This information makes it possible to determine when the user U took puffs during a heating session. This information can be utilized to customize the heating profile to suit the user U.

The device information may include location information of the inhalation device 100.

More specifically, the device information may include a time-series transition of location information of the inhalation device 100. Moreover, the location information of the user terminal 200 may also be used as location information of the inhalation device 100. This information makes it possible to determine behavior patterns of the user U. The behavior patterns of the user U can be utilized for the user terminal 200 to suggest smoking places or sales outlets 8 suited to the behavior patterns of the user U.

The device information may include information indicating an error that has occurred in the inhalation device 100. This information can be utilized in order to recommend timings for maintenance of the inhalation device 100.

Examples of device information were described above. The device information may be acquired by the battery pack 170 or the main body of the inhalation device 100, and may be written into the memory 174, for example.

### (7) Charging information

The memory 174 of the battery pack 170 stores charging information, which is information indicating the charging situation of the battery 171. The charging information may include at least any one item of information from those illustrated below.

The charging information may include information indicating the number of times of charging. The number of times of charging means the number of times that the battery pack 170 was connected to the charging station 300 or to a home charger, or similar. This information makes it possible to determine the state of deterioration of the battery pack 170.

The charging information may include information indicating charging intervals. A charging interval is the elapsed time from removal of the battery pack 170 from the charging station 300 or a home charger, etc., until connection thereto. This information makes it possible to determine the state of deterioration of the battery pack 170.

The charging information may include information indicating the time of charging and the amount of charging per charge. The time of charging means the date and time at which the battery pack 170 was connected to the charging station 300 or to a home charger, or similar. The amount of charging per charge means the value of voltage increase resulting from charging. This information makes it possible to determine the situation for each charge, and the state of deterioration of the battery pack 170.

The charging information may include information indicating a charging voltage or charging current. The charging voltage means the value of a voltage applied to the battery 171 during charging. The charging current means the value of a current flowing through the battery 171 during charging. This information makes it possible to determine the device which charged the battery pack 170 (charging station 300 or home charger).

The charging information may include information relating to location during charging. This information makes it possible to determine the place where the battery pack 170 was charged (e.g., at the sales outlet 8 or at home).

The charging information may include the number of times abnormal charging occurred and the amount of charging when the abnormal charging occurred. This information makes it possible to record errors that have occurred in the battery pack 170.

The charging information may include information indicating the SOH (States of Health) of the battery 171. This information makes it possible to determine the state of deterioration of the battery 171.

Examples of charging information were described above. The charging information may be acquired by the battery pack 170 or the charging station 300, and may be written into the memory 174, for example.

### (8) Supplementary information

Examples of the information which can be stored in the battery pack 170 and collected by utilizing replacement of the battery pack 170 were described above.

The battery pack 170 can store, in association with each other, at least two or more of the battery pack ID, replacement log, heating-related discharge information, non-heating-related discharge information, device information, and charging information, and can also send this information. This configuration enables more precise analysis of the information collected. For example, by associating the replacement log with the heating-related discharge information, it is possible to analyze the heating-related discharge situation of the inhalation device 100 identified by the device ID included in the replacement log.

### <4. Recommendation of candidate place for replacement of battery pack 170>

The management server 500 controls processing to recommend to the user U a candidate place for replacement of the battery pack 170 (that is, a charging station 300). More specifically, the management server 500 selects one or more charging stations 300 from among a plurality of charging stations 300 capable of providing the battery pack 170, as the candidate place for replacement of the battery pack 170. The management server 500 then recommends to the user U the selected candidate place(s) for replacement of the battery pack 170. For example, the management server 500 generates a UI screen with locations of candidate places for replacement of the battery pack 170 mapped onto a map, and causes the user terminal 200 to display this UI screen. By virtue of this configuration, the user U can be prompted to replace the battery pack 170 at a suitable charging station 300, thus making it possible to improve usability for the user U.

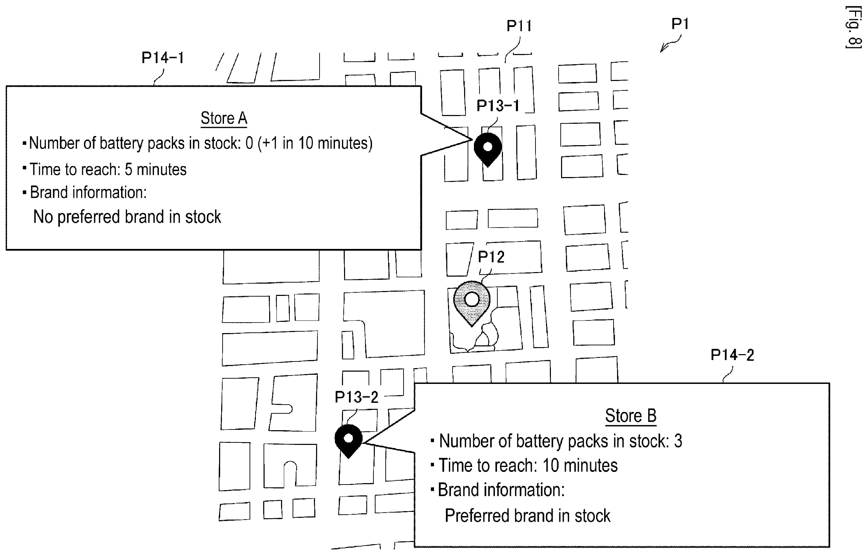

An example of the UI screen displayed by the terminal device 200 will be described below with reference to fig. 8.

Fig. 8 is a diagram showing an example of the UI screen displayed by the user terminal 200 according to the embodiment. As shown in fig. 8, a UI screen P1 displays a pin P12 and pins P13 (P13-1 and P13-2) superimposed on a map P11 of the area around the current location of the user U. The pin P12 indicates the current location of the user U. The pins P13 indicate locations of charging stations 300 recommended as candidate places for replacement of the battery pack 170. There is no particular limitation as to the number of charging stations 300 displayed, and there may be two, as shown in fig. 8, or there may be no limit. The user U may seek to replace the battery pack 170 at a convenient charging station 300 by referring to this UI screen P1.

As shown in fig. 8, annotations P14 (P14-1 and P14-2) indicating information relating to the charging stations 300 or the sales outlets 8 where the charging stations 300 are placed are also displayed in association with the respective charging stations 300. The annotations P14 include: names of the sales outlets 8, the number of battery packs 170 available for replacement (i.e., the number of fully charged battery packs 170), the time needed for the user U to reach the charging station 300 from the current location of the user U, and information indicating whether or not substrate packs of the user U's preferred brand are in stock. By referring to the annotations P14, the user U is able to select, as the place for replacement of the battery pack 170, a sales outlet 8 which has a battery pack 170 available for replacement in stock, which will take a short time to reach, or which stocks substrate packs of the preferred brand. Moreover, as shown by the annotation P14-1, the UI screen P1 may also display a future inventory, such as the number of provideable battery packs 170 in stock increasing by one 10 minutes from now. In this case, the user U can select a sales outlet 8 to visit in anticipation of a future increase in inventory.

An example of the UI screen displayed by the user terminal 200 was described above.

As described above, the management server 500 may collect information stored in the memory 174 of the battery pack 170 via the charging station 300, and may also recommend places for replacement of the battery pack 170 based on such information. Additionally, the management server 500 may collect, in real time, information stored in the memory 174 of the battery pack 170 via the inhalation device 100 to which the battery pack 170 is connected, and may recommend places for replacement of the battery pack 170 based on such information. Furthermore, the management server 500 may collect, in real time, information relating to the inhalation device 100 or the charging station 300, from the inhalation device 100 or from the management server 500 itself, and may recommend places for replacement of the battery pack 170 based on such information. Processing to recommend a candidate place for replacement of the battery pack 170 will be described in detail below.

The management server 500 may implement the processing to recommend a candidate place for replacement of the battery pack 170, based on information indicating the remaining battery capacity of the battery pack 170 currently connected to the inhalation device 100. For example, the management server 500 recommends a candidate place for replacement of the battery pack 170 at a timing before the remaining battery capacity of the battery pack 170 currently connected to the inhalation device 100 is used up. By virtue of this configuration, the user U can be prompted to replace the battery pack 170 before it runs out, making it possible to prevent a situation where smoking is no longer possible because the remaining battery capacity of the battery pack 170 is used up.

Specifically, the management server 500 implements the processing to recommend a candidate place for replacement of the battery pack 170 when the remaining battery capacity of the battery pack 170 currently connected the inhalation device 100 is less than a first threshold. Here, the first threshold is preferably set at or above a value corresponding to a remaining battery capacity enabling one or more substrates to be consumed. That is to say, the management server 500 may recommend a candidate place for replacement of the battery pack 170 at a timing where the remaining battery capacity of the battery pack 170 is sufficient to enable a predetermined number of substrates to be consumed. This configuration makes it possible to prompt the user U to replace the battery pack 170 at a timing that still leaves room for smoking using a predetermined number of substrates.

The management server 500 may set the first threshold on the basis of information indicating the heating profile used by the inhalation device 100. For example, the management server 500 may set a higher first threshold for an inhalation device 100 using a heating profile that consumes a large amount of power at a relatively high temperature. Meanwhile, the management server 500 may set a lower first threshold for an inhalation device 100 using a heating profile that consumes a small amount of power at a relatively low temperature. This configuration makes it possible to prompt the user U to replace the battery pack 170 at a suitable timing commensurate with power consumption according to heating profile.

The management server 500 may set the first threshold on the basis of a mode of use of the inhalation device 100. For example, the management server 500 may set a higher first threshold for a user U taking shorter smoking intervals. Meanwhile, the management server 500 may set a lower first threshold for a user U taking longer smoking intervals. This configuration makes it possible to prompt the user U to replace the battery pack 170 at a suitable timing commensurate with the mode of use of the inhalation device 100.

The timing at which a candidate place for replacement of the battery pack 170 is recommended may be determined on the basis of a variety of information, instead of or as well as the remaining battery capacity of the battery pack 170 currently connected to the inhalation device 100.

As an example, the management server 500 may implement the processing to recommend a candidate place for replacement of the battery pack 170 when the number of substrates carried along with the inhalation device 100 is less than a second threshold. The number of substrates carried along with the inhalation device 100 may be input to the user terminal 200 by the user U, or may be estimated on the basis of information relating to substrate packs purchased by the user U and number of times of smoking since purchase. As described above, it is desirable for the battery pack 170 to be replaced at the same timing as a substrate pack being purchased. In this regard, the configuration above makes it possible to prompt replacement of the battery pack 170 and to prompt purchase of a substrate pack at the same time as replacement of the battery pack 170, before the user U has run out of substrates on their person. As a result, it is possible to prevent a situation where smoking is not possible because the user U has no substrates on hand.

Moreover, the management server 500 may set the second threshold on the basis of information indicating the mode of use of the inhalation device 100. For example, the management server 500 may set a higher second threshold for a user U taking shorter smoking intervals, and may set a lower second threshold for a user U taking longer smoking intervals. This configuration makes it possible to prompt the user U to replace the battery pack 170 at a suitable timing commensurate with the pace at which each user U consumes substrates.

As another example, the management server 500 may implement the processing to recommend a candidate place for replacement of the battery pack 170 when an abnormality has occurred in the battery pack 170 connected to the inhalation device 100. The occurrence or otherwise of an abnormality in the battery pack 170 may be input to the user terminal 200 by the user U, or may be determined on the basis of the heating-related discharge information or charging information. By virtue of this configuration, it is possible to prompt the user U to replace a battery pack 170 in which an abnormality has occurred, and to prevent use of a battery pack 170 in which an abnormality has occurred.

The management server 500 can recommend multiple charging stations 300 as candidate places for replacement of the battery pack 170. In that case, the management server 500 may recommend a plurality of charging stations 300 following an order of preference based on a predetermined reference. An example of the reference for setting the order of preference will be described below.

The management server 500 may preferentially recommend a charging station 300 having a battery pack 170 that can be provided to the inhalation device 100 (i.e., that is fully charged), as the candidate place for replacement of the battery pack 170. The management server 500 may also preferentially recommend a charging station 300 having a greater number of battery packs 170 that can be provided to the inhalation device 100, as the candidate place for replacement of the battery pack 170. This configuration makes it possible to prevent the problem of a user U, despite having visited a sales outlet 8, being unable to replace the battery pack 170 because there are no more in stock.

The management server 500 may preferentially recommend a charging station 300 that allows return of the spent battery pack 170 used by the inhalation device 100, as the candidate place for replacement of the battery pack 170. For example, the management server 500 preferentially recommends a charging station 300 having a vacant charging point, as the candidate place for replacement of the battery pack 170. This configuration makes it possible to prevent the problem of a user U, despite having visited a sales outlet 8, being unable to return the battery pack 170, and not being able to replace the battery pack 170 as a result.

Here, the management server 500 may select a candidate place for replacement of the battery pack 170, based on a scheduled charging end time for each of the one or more charging points in the charging station 300, and an expected arrival time of the user U at that charging station 300. For example, the management server 500 may first of all acquire the scheduled charging end time for each charging point, which is estimated by the charging station 300. Furthermore, the management server 500 may estimate the expected arrival time of the user U at the charging station 300, based on the current location of the user U as indicated by the location information of the user terminal 200, and location information of the sales outlet 8 where the charging station 300 is placed. When there is a charging station 300 having a charging point at which the expected arrival time is after the scheduled charging end time, the management server 500 may determine that a provideable battery pack 170 is in stock at that charging station 300, which may then be recommended as the candidate place for replacement of the battery pack 170. By virtue of this configuration, a charging station 300 that does not have a provideable battery pack 170 in stock at the present time but is expected to have a provideable battery pack 170 by the time the user U arrives can be recommended as the candidate place for replacement of the battery pack 170.

The management server 500 may preferentially recommend a charging station 300 geographically close to the user U, as the candidate place for replacement of the battery pack 170. For example, the management server 500 may preferentially recommend a charging station 300 located within a predetermined distance from the current location of the user U as indicated by the location information of the user terminal 200, as the candidate place for replacement of the battery pack 170. Alternatively, the management server 500 may preferentially recommend the charging station 300 closest to the current location of the user U, as the candidate place for replacement of the battery pack 170. This configuration makes it possible to prompt replacement of the battery pack 170 at the nearest charging station 300.

The management server 500 may preferentially recommend a charging station 300 placed in a sales outlet 8 stocking the substrates used by the inhalation device 100, as the candidate place for replacement of the battery pack 170. For example, the management server 500 may preferentially recommend a charging station 300 placed in a sales outlet 8 stocking the substrate pack most recently purchased by the user U or frequently purchased by the user U, as the candidate place for replacement of the battery pack 170. This configuration allows the user U to purchase their preferred substrate packs while also replacing the battery pack 170.

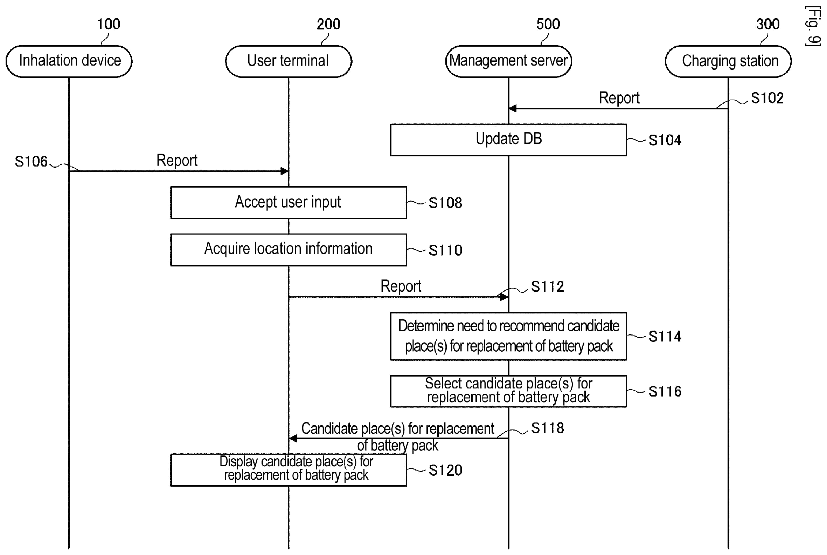

An example of the processing flow implemented by means of the system 1 will be described next with reference to fig. 9.

Fig. 9 is a sequence chart showing an example of the processing flow implemented by the system 1 according to this embodiment. This sequence involves the inhalation device 100, the user terminal 200, the charging station 300, and the management server 500.

As shown in fig. 9, the charging station 300 first of all reports various types of information to the management server 500 (step S102). As an example, the charging station 300 sends to the management server 500: the availability of each charging point, the situation of charging progress of battery packs 170, and scheduled charging end times, etc. As another example, the charging station 300 sends to the management server 500 information collected from the battery packs 170 connected.

Next, the management server 500 stores the information received from the charging station 300 in a database (also referred to below as a "DB"), thereby updating the DB for managing the information from the charging station 300 (step S104). This DB further stores the number of charging points in the charging station 300, and location information of the sales outlet 8 where the charging station 300 is placed, etc.

Next, the inhalation device 100 reports various types of information to the user terminal 200 (step S106). For example, the inhalation device 100 sends, to the user terminal 200, information indicating the remaining battery capacity of the battery pack 170 currently connected to the inhalation device 100.

Next, the user terminal 200 accepts user input (step S108). For example, the user terminal 200 accepts input of the number of substrates that the user U is carrying along with the inhalation device 100.

Next, the user terminal 200 acquires location information indicating the current location of the user U (step S110).

The user terminal 200 then reports various types of information to the management server 500 (step S112). For example, the user terminal 200 sends, to the management server 500, the information received from the inhalation device 100 in step S106, the information input by the user U in step S108, and the location information acquired in step S110.

Next, the management server 500 determines whether or not there is a need to recommend (a) candidate place(s) for replacement of the battery pack 170 (step S114). For example, the management server 500 determines that there is a need to recommend (a) candidate place(s) for replacement of the battery pack 170 when the remaining battery capacity of the battery pack 170 currently connected the inhalation device 100 is less than the first threshold.

When it has been determined that there is a need to recommend (a) candidate place(s) for replacement of the battery pack 170, the management server 500 selects one or more charging stations 300 as (a) candidate place(s) for replacement of the battery pack 170 (step S116). For example, the management server 500 selects charging stations 300 stocking provideable battery packs 170 and within a predetermined distance from the current location of the user U, by referring to the DB updated in step S104, as candidate places for replacement of the battery pack 170.

Next, the management server 500 sends, to the user terminal 200, information indicating the selected candidate place(s) for replacement of the battery pack 170 (step S118).

Based on the information received, the user terminal 200 then displays the UI screen showing the candidate place(s) for replacement of the battery pack 170 (step S120).

### <5. Reservation function>

The management server 500 may control processing to reserve a battery pack 170 at the candidate place for replacement of the battery pack 170. The management server 500 reserves, for the user U, a battery pack 170 stocked at a charging station 300 selected by the user U from among charging stations 300 recommended to the user U as candidate places for replacement of the battery pack 170. This configuration makes it possible to improve usability.

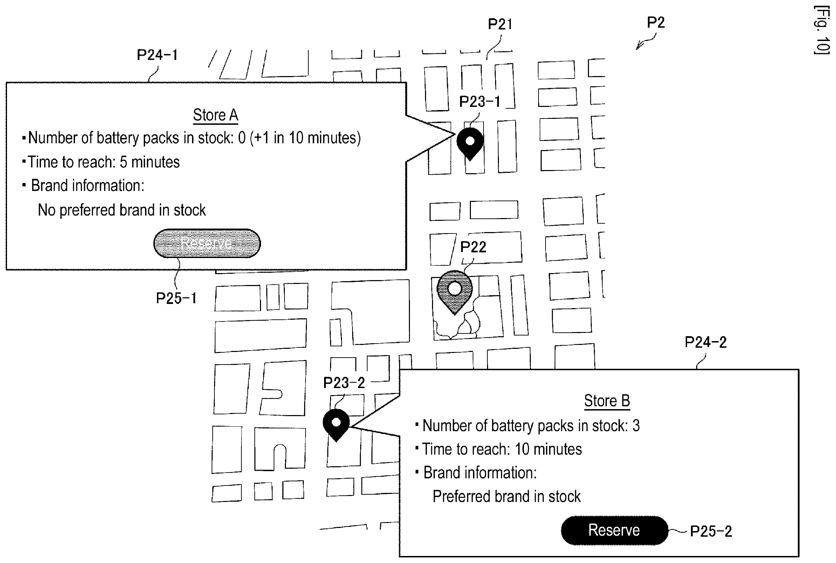

The battery pack 170 can be reserved on the UI screen displayed by the user terminal 200. An example of the UI screen relating to reservation will be described below with reference to fig. 10.

Fig. 10 is a diagram showing an example of the UI screen displayed by the user terminal 200 according to the embodiment. As shown in fig. 10, a UI screen P2 displays a pin P22 and pins P23 (P23-1 and P23-2) superimposed on a map P21 of the area around the current location of the user U. The pin P22 indicates the current location of the user U. The pins P23 indicate locations of charging stations 300 recommended as candidate places for replacement of the battery pack 170.

As shown in fig. 10, annotations P24 (P24-1 and P24-2) indicating information relating to the charging stations 300 or the sales outlets 8 where the charging stations 300 are placed are also displayed in association with the respective charging stations 300. The annotations P24 include the same details as in the annotations P14 shown in fig. 8, and further include reservation buttons P25 (P25-1 and P25-2). The user U can reserve a replacement of the battery pack 170 at a charging station 300 by selecting a reservation button P25. It should be noted that the reservation button P25-1 relating to the charging station 300 at store A is deactivated and cannot be selected because store A has no stock of battery packs 170 available for replacement at the present time and is still not expected to have any stock after the 5 minutes needed to reach store A. Meanwhile, the reservation button P25-2 relating to the charging station 300 at store B, which does have stock of battery packs 170 available for replacement at the present time, is activated and can be selected.

After accepting the reservation, the management server 500 controls the charging station 300 to secure the reserved battery pack 170 and to provide the secured battery pack 170 only to the user U who made the reservation. For example, the charging station 300 may lock the accommodating case 301 accommodating the reserved battery pack 170, or may cause the LED 302 corresponding to that accommodating case 301 to emit light in a predetermined form. The charging station 300 may then provide the reserved battery pack 170 only when the user U who has come to collect the battery pack 170 has been authenticated as the user U who made the reservation. The authentication may be performed by means of a two-dimensional code issued by the management server 500 at the time of the reservation, which is then displayed on the user terminal 200 and read by the charging station 300.

Moreover, the management server 500 may cancel the reservation if the user U who made the reservation does not collect the reserved battery pack 170 within a predetermined time after acceptance of the reservation.

When the management server 500 has accepted a reservation, the management server 500 may notify the user terminal 200 of information indicating that acceptance of the reservation is complete. Furthermore, when the management server 500 has canceled a reservation, the management server 500 may notify the user terminal 200 of information indicating that the reservation has been canceled.

### <6. Supplementary Information>

Preferred embodiments of the present disclosure were described in detail above with reference to the appended drawings, but the present disclosure is not limited to such examples. It is obvious that a person having ordinary knowledge in the technical field to which the present disclosure belongs will be able to conceive of a number of variant examples or modified examples within the scope of the technical concept disclosed in the claims, and any such variant examples or modified examples are naturally understood to fall within the technical scope of the present disclosure.

The embodiments above described an example in which the inhalation device 100 communicates with the management server 500 via the user terminal 200 or the charging station 300, but the present disclosure is not limited to such an example. The inhalation device 100 may communicate directly with the management server 500.

The embodiments above described an example in which the charging station 300 is operated by the staff S, but the present disclosure is not limited to such an example. The charging station 300 may equally be operated by self-service by the user U. That is to say, the staff S need not be involved in replacing battery packs 170.

The embodiments above described an example in which the system 1 includes the sales outlet terminal 400. As an example, the functions of the sales outlet terminal 400 may be included in the user terminal 200. In that case, payments for replacement of a battery pack 170 may be settled by electronic payment using the user terminal 200. As another example, the functions of the sales outlet terminal 400 may be included in the charging station 300.

The embodiments above described a service for replacement of the battery pack 170 which functions as the power source unit 111 of the inhalation device 100, but the scope of the replacement service is not limited to such an example. The power source unit 111 of the inhalation device 100 may be charged by a portable charger with a built-in battery, which is configured to be detachable from the inhalation device 100. The replacement service may then be provided for the portable charger, and the technology relating to the present disclosure may be applied with the portable charger understood as the battery pack of the present disclosure. For example, the charging station 300 may recommend candidate places for replacement of the portable charger to the user U.

The processing operations described in the embodiments above may be implemented with any device serving as the main agent. For example, the determination as to whether or not there is a need to recommend candidate places for replacement of the battery pack 170 may be made by the user terminal 200. In that case, the user terminal 200 may send to the management server 500 a request to recommend places for replacement of the battery pack 170, and the management server 500 having received the request may give a response to the user terminal 200 after selecting places for replacement of the battery pack 170.

It should be noted that the series of processes performed by each device described in the present description may be realized by using software, hardware, or any combination of software and hardware. Programs constituting the software are prestored on a recording medium (more specifically, a non-transitory computer-readable storage medium) provided internally or externally to each device, for example. When the programs are then executed, for example, by a computer for controlling each device described in the present description, the programs are read into a random access memory (RAM) and executed by means of a processing circuit such as a central processing unit (CPU). The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit (ASIC), a general-purpose processor which executes functions by reading software programs, or a computer on a server used for cloud computing, etc. Furthermore, the series of processes performed by each device described in the present description may be processed centrally by a single computer, or may be processed in a distributed manner by multiple computers. In addition, in the embodiments described above, two or more communication means present in a single device may be physically realized by a single medium.

Furthermore, the processing described using flowcharts or sequence diagrams in the present description need not necessarily be implemented in the order depicted. Some processing steps may be implemented in parallel. Furthermore, additional processing steps may be employed and some processing steps may be omitted.

The following configurations also fall within the technical scope of the present disclosure.
(1) A control device comprising:
   a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.
(2) The control device as disclosed in (1) above, wherein
   the control unit implements the processing to recommend a candidate place for replacement of the battery pack, based on information indicating the remaining battery capacity of the battery pack currently connected to the inhalation device.
(3) The control device as disclosed in (2) above, wherein
   the control unit implements the processing to recommend a candidate place for replacement of the battery pack when the remaining battery capacity of the battery pack currently connected to the inhalation device is less than a first threshold, and the first threshold is set at or above a value corresponding to a remaining battery capacity enabling one or more of the abovementioned substrates to be consumed.
(4) The control device as disclosed in (3) above, wherein
   the control unit sets the first threshold on the basis of control information for controlling a temperature at which the inhalation device heats the aerosol source.
(5) The control device as disclosed in (3) or (4) above, wherein
   the control unit sets the first threshold on the basis of a mode of use of the inhalation device.
(6) The control device as disclosed in any one of (3) to (5) above, wherein
   the control unit implements the processing to recommend a candidate place for replacement of the battery pack when the number of substrates carried along with the inhalation device is less than a second threshold.
(7) The control device as disclosed in any one of (1) to (6) above, wherein
   the control unit implements the processing to recommend a candidate place for replacement of the battery pack when an abnormality has occurred in the battery pack connected to the inhalation device.
(8) The control device as disclosed in any one of (1) to (7) above, wherein
   the control unit preferentially recommends a battery pack provision device having a battery pack that can be provided to the inhalation device, as the candidate place for replacement of the battery pack.
(9) The control device as disclosed in any one of (1) to (8) above, wherein
   the control unit preferentially recommends a battery pack provision device that allows return of the spent battery pack used by the inhalation device, as the candidate place for replacement of the battery pack.
(10) The control device as disclosed in any one of (1) to (9) above, wherein
   the control unit recommends a candidate place for replacement of the battery pack, based on a scheduled charging end time for each of one or more charging points in the battery pack provision device, and an expected arrival time of the user of the inhalation device at the battery pack provision device.
(11) The control device as disclosed in any one of (1) to (10) above, wherein
   the control unit preferentially recommends a battery pack provision device geographically close to the user, as the candidate place for replacement of the battery pack.
(12) The control device as disclosed in any one of (1) to (11) above, wherein
   the control unit preferentially recommends a battery pack provision device placed in a sales outlet stocking the substrates used by the inhalation device, as the candidate place for replacement of the battery pack.
(13) The control device as disclosed in any one of (1) to (12) above, wherein
   the control unit controls processing to reserve the battery pack at the candidate place for replacement of the battery pack.
(14) A control method implemented by means of a processor, the control method comprising:
   controlling processing to recommend, to a user of an inhalation device for generating an aerosol by using a substrate containing an aerosol source, a candidate place for replacement of a battery pack which is replaceably connected to the inhalation device,
   the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.
(15) A program for causing a computer to function as
   a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

### REFERENCE SIGNS LIST

1 System
100 Inhalation device
110 Power supply unit
111 Power source unit
112 Sensor unit
113 Notification unit
114 Memory unit
115 Communication unit
116 Control unit
120 Cartridge
121 Heating unit
122 Liquid guiding portion
123 Liquid storage portion
124 Mouthpiece
130 Flavoring cartridge
131 Flavor source
140 Accommodating portion
141 Internal space
142 Opening
143 Bottom portion
144 Heat insulating portion
150 Stick-type substrate
151 Substrate portion
152 Mouthpiece portion
170 Battery pack
171 Battery
172 Protection IC
173 MCU
174 Memory
175 Sensor
176 Terminal
180 Air flow path
181 Air inflow hole
182 Air outflow hole
200 User terminal
210 Communication unit
220 Memory unit
230 Input unit
240 Output unit
250 Control unit
300 Charging station
301 Accommodating case
302 LED
310 Communication unit
320 Memory unit
330 Input unit
340 Output unit
350 Charging unit
351 Connection terminal
360 Control unit
400 Sales outlet terminal
500 Management server
510 Communication unit
520 Memory unit
530 Control unit
8 Sales outlet
9 Network

## Claims

1. A control device comprising:
a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

2. The control device as claimed in claim 1, wherein
the control unit implements the processing to recommend a candidate place for replacement of the battery pack, based on information indicating the remaining battery capacity of the battery pack currently connected to the inhalation device.

3. The control device as claimed in claim 2, wherein
the control unit implements the processing to recommend a candidate place for replacement of the battery pack when the remaining battery capacity of the battery pack currently connected to the inhalation device is less than a first threshold, and
the first threshold is set at or above a value corresponding to a remaining battery capacity enabling one or more of the abovementioned substrates to be consumed.

4. The control device as claimed in claim 3, wherein
the control unit sets the first threshold on the basis of control information for controlling a temperature at which the inhalation device heats the aerosol source.

5. The control device as claimed in claim 3 or 4, wherein
the control unit sets the first threshold on the basis of a mode of use of the inhalation device.

6. The control device as claimed in any one of claims 3 to 5, wherein
the control unit implements the processing to recommend a candidate place for replacement of the battery pack when the number of substrates carried along with the inhalation device is less than a second threshold.

7. The control device as claimed in any one of claims 1 to 6, wherein
the control unit implements the processing to recommend a candidate place for replacement of the battery pack when an abnormality has occurred in the battery pack connected to the inhalation device.

8. The control device as claimed in any one of claims 1 to 7, wherein
the control unit preferentially recommends a battery pack provision device having a battery pack that can be provided to the inhalation device, as the candidate place for replacement of the battery pack.

9. The control device as claimed in any one of claims 1 to 8, wherein
the control unit preferentially recommends a battery pack provision device that allows return of the spent battery pack used by the inhalation device, as the candidate place for replacement of the battery pack.

10. The control device as claimed in any one of claims 1 to 9, wherein
the control unit recommends a candidate place for replacement of the battery pack, based on a scheduled charging end time for each of one or more charging points in the battery pack provision device, and an expected arrival time of the user of the inhalation device at the battery pack provision device.

11. The control device as claimed in any one of claims 1 to 10, wherein
the control unit preferentially recommends a battery pack provision device geographically close to the user, as the candidate place for replacement of the battery pack.

12. The control device as claimed in any one of claims 1 to 11, wherein
the control unit preferentially recommends a battery pack provision device placed in a sales outlet stocking the substrates used by the inhalation device, as the candidate place for replacement of the battery pack.

13. The control device as claimed in any one of claims 1 to 12, wherein
the control unit controls processing to reserve the battery pack at the candidate place for replacement of the battery pack.

14. A control method implemented by means of a processor, the control method comprising:
controlling processing to recommend, to a user of an inhalation device for generating an aerosol by using a substrate containing an aerosol source, a candidate place for replacement of a battery pack which is replaceably connected to the inhalation device,
the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.

15. A program for causing a computer to function as
a control unit for controlling processing to recommend, to a user of an inhalation device for generating an aerosol by using a substrate containing an aerosol source, a candidate place for replacement of a battery pack which is replaceably connected to the inhalation device, the processing being implemented by selecting, as the candidate place for replacement of the battery pack, one or more battery pack provision devices from among a plurality of battery pack provision devices capable of providing the battery pack, and then recommending the selected candidate place for replacement of the battery pack to the user of the inhalation device.
